# FASCICULE DE BREVET EUROPEEN

(11) **EP 0 538 351 B1**
(45) Date de publication et mention de la délivrance du brevet: **07.12.1994**
(21) Numéro de dépôt: 91913026.0
(22) Date de dépôt: 08.07.1991
(51) Int. Cl.: F16L 55/17

(54) **MANCHON DE REPARATION DE FUITES DANS UNE CANALISATION**
HÜLSE ZUM REPARIEREN VON LECKEN IN EINER ROHRLEITUNG
SLEEVE FOR REPAIRING LEAKS IN A PIPE

(30) Priorité: 09.07.1990 FR 9008684
(43) Date de publication de la demande: 28.04.1993
(73) Titulaire: BOULET-D'AURIA, TERLIZZI & CIE, MC-98000 Monaco (MC)
(72) Inventeur: BOULET D'AURIA, Stanislas, F-06320 Cap-d'Ail (FR)
(74) Mandataire: Rodhain, Claude
(86) Numéro de dépôt international: FR9100550
(87) Numéro de publication internationale: WO9201190

(56) Documents cités:
- EP-A- 0 170 845
- WO-A-80/02124
- FR-A- 2 516 439
- FR-A- 2 519 731
- FR-A- 2 605 378
- GB-A- 177 939
- GB-A- 606 816
- GB-A- 1 327 151
- GB-A- 2 080 916
- GB-A- 2 153 944
- US-A- 3 350 755

## Description

L'invention concerne un manchon de réparation de canalisation destinée notamment au transport d'eau, de gaz ou autre produit et constituée de matière plastique telle le polyéthyléne ou de métal tel la fonte.

De tels dispositifs sont connus et en particulier un de ces dispositifs est décrit dans le brevet FR-A-2 605 378 (COCHON dit CLEMENT) . Selon ce dispositif il est formé une enceinte à partir de demi-coquilles reliées entre elles par des brides longitudinales et un certain nombre de vis et écrous. Le volume intérieur de l'enceinte est assez vaste pour englober toute la connexion existante et sa boulonnerie correspondante. L'étanchéité est réalisée par des joints toriques en place sur la demi-coquille inférieure dans le plan longitudinal dans des rainures réalisées sur les brides de la demi-coquille. Sur la canalisation, une étanchéité préliminaire est obtenue par deux couples de joints toriques en place à chaque extrémité de l'enceinte. Enfin, l'étanchéité définitive consiste en une injection de résine époxy dans les couronnes ainsi formées par chaque couple de joints toriques.

Un tel dispositif, à priori métallique, nécessite jusqu'à neuf vis et écrous pour la fixation de chaque bride d'où au total jusqu'à dix huit vis et écrous, ce qui nécessite une mise en oeuvre relativement longue. Par ailleurs, outre le remplissage par une injection de résine époxy, l'étanchéité n'est effectuée que par les joints toriques de constitution simple et de petite section et donc l'effet d'étanchéité n'est pas trés fiable.

Mais le problème le plus préjudiciable que présentent de tels manchons métalliques est le fait que le métal subit des dégradations du fait de la corrosion par des attaques par des agents extérieurs, de l'oxydation, etc...

On connaît de la demande de brevet français FR-A-2 516 439 un manchon selon le préambule de la revendication 1. Ce manchon est mis en place autour d'une canalisation, et l'étanchéité est obtenue après une opération de fusion.

Un manchon selon l'invention est défini dans la revendication 1. Le manchon lui-même n'a besoin que d'être étanche à la matière plastique (étanchéité primaire), la matière plastique injectée dans la cavité interne assurant l'étanchéité à titre principal.

Des variantes de réalisation avantageuses sont définies dans les revendications 2 à 11.

En particulier selon un agencement préféré, les bords en demi-cercle de chaque demi-coquille venant en contact de la tubulure sont pourvus de stries déformables, formant un moyen d'étanchéité par écrasement des stries sur la tubulure.

Le manchon peut comporter également un autre moyen d'étanchéité consistant en un joint de section importante de préférence en polyuréthane inséré en demi-cercle dans une rainure de chaque demi-coquille.

De façon preférentielle, la matière plastique injectée est de la mousse de polyuréthane, mais ce remplissage peut être réalisé par une mousse de matière plastique d'un autre type et même par une résine synthétique.

Selon une variante destinée aux canalisations en matière plastique notamment de transport du gaz, le manchon comporte un moyen d'étanchéité constitué de fils conducteurs situés à proximité des surfaces destinées à venir en contact avec la tubulure ; dans ce cas, il est destiné en particulier à équiper un joint de tubulure en polyéthylène classique de distribution de gaz.

Enfin, une des demi-coquilles peut comporter des plots de positionnement coopérant avec des orifices correspondants sur l'autre demi-coquille.

L'invention propose trois variantes pour réaliser l'effet de coin destiné à la liaison des brides de fixation.

Selon une première variante l'effet de coin est réalisé par des cannelures formées dans les brides, les cannelures de brides juxtaposées s'emboitant les unes dans les autres et étant pourvues d'orifices de dimensions différentes et légèrement décalés les uns par rapport aux autres, destinés à recevoir une barrette de blocage ayant une section diminuant de sa tête vers son extrémité, réalisant un blocage supplémentaire par compression de matière.

Selon une deuxième variante, les brides ont une section transversale de forme trapézoïdale et une section longitudinale en forme de coin et sont reliées l'une à l'autre par une pièce présentant une cavité de forme complémentaire.

Selon une troisième variante, les brides ont une section transversale de forme trapézoïdale et une section longitudinale en forme de coin et sont reliées l'une à l'autre par une pièce présentant une cavité recevant avec un jeu substantiel les brides, celles-ci étant bloquées par une barrette de forme complémentaire au jeu existant dans la cavité de la pièce 30 et introduite dans celui-ci.

L'invention est exposée ci-après plus en détail à l'aide des dessins représentant seulement un mode d'exécution.

La figure 1 représente une vue frontale du dispositif conforme à l'invention et particulièrement destiné aux canalisations de gaz.

Les figures 2A et 2B sont des détails en coupe longitudinale explicitant l'effet de blocage réalisé par les cannelures et la barrette correspondante.

La figure 3 est une vue en coupe longitudinale du dispositif conforme à l'invention et notamment destiné à des canalisations de gaz en matière plastique.

La figure 4 est une demi-vue en coupe longitudinale représentant schématiquement la fusion d'électro soudure obtenue après mise en tension des fils conducteurs.

La figure 5 est une vue frontale à coupe longitudinale partielle représentant un dispositif conforme à l'invention et notamment destiné à des canalisations d'eau.

La figure 6 est une vue frontale d'un tel dispositif mis en place.

La figure 7 est une vue de côté avec coupe transversale partielle d'un dispositif conforme à l'invention et destiné notamment à des canalisations d'eau.

Les figures 8A et 8B sont respectivement une vue partielle frontale et une vue en coupe longitudinale selon AA d'une deuxième variante de réalisation de la liaison des brides de fixation du manchon.

Les figures 9A et 9B sont respectivement une vue partielle en coupe transversale et une vue en coupe longitudinale selon BB d'une troisième variante ce réalisation de la liaison des brides de fixation du manchon.

La figure 10 est une vue de face d'une demi-coquille du manchon comportant deux bornes de connexion électrique.

La figure 11 est une représentation schématique d'un dispositif de sécurité aménagé dans une des bornes de connexion d'une demi-coquille du manchon.

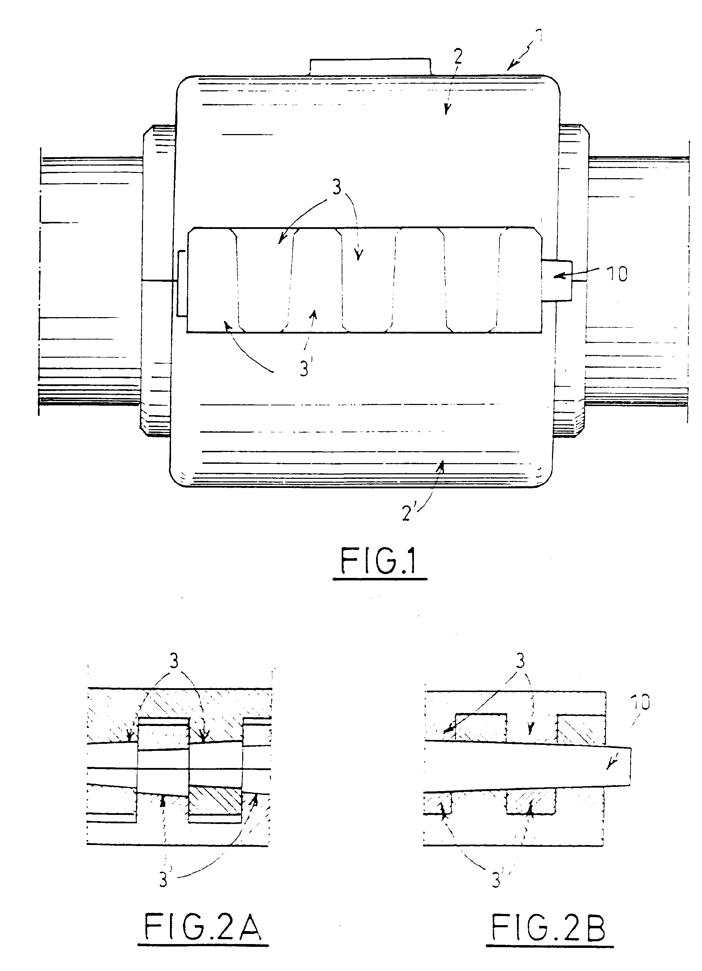

Le manchon conforme à l'invention va d'abord être décrit dans son application particulièrement adaptée aux canalisations de gaz et représenté sur les figures 1 à 4.

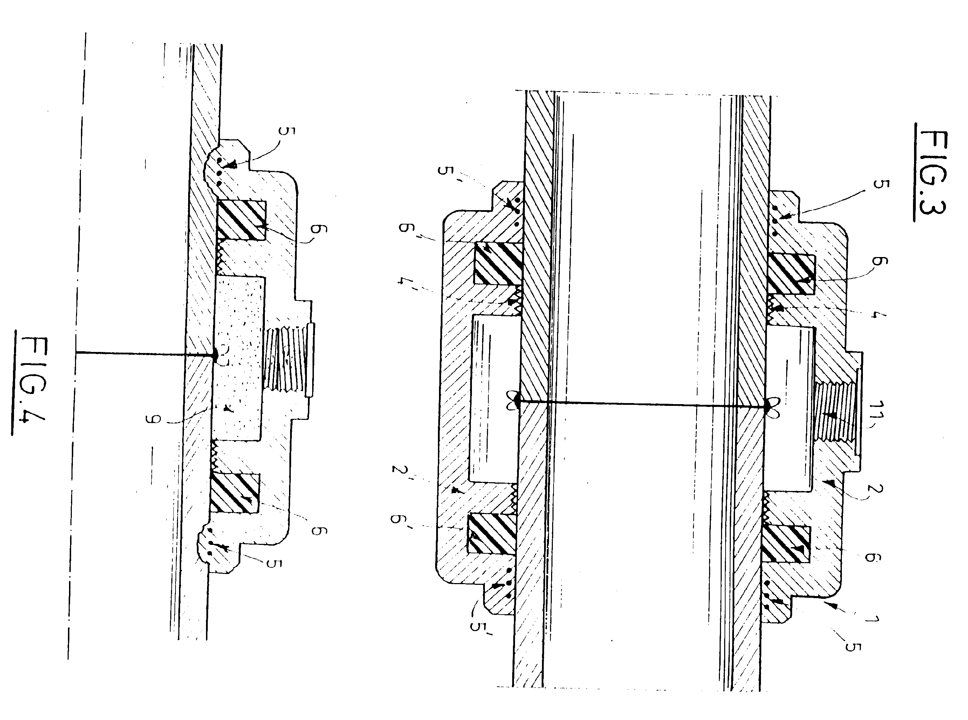

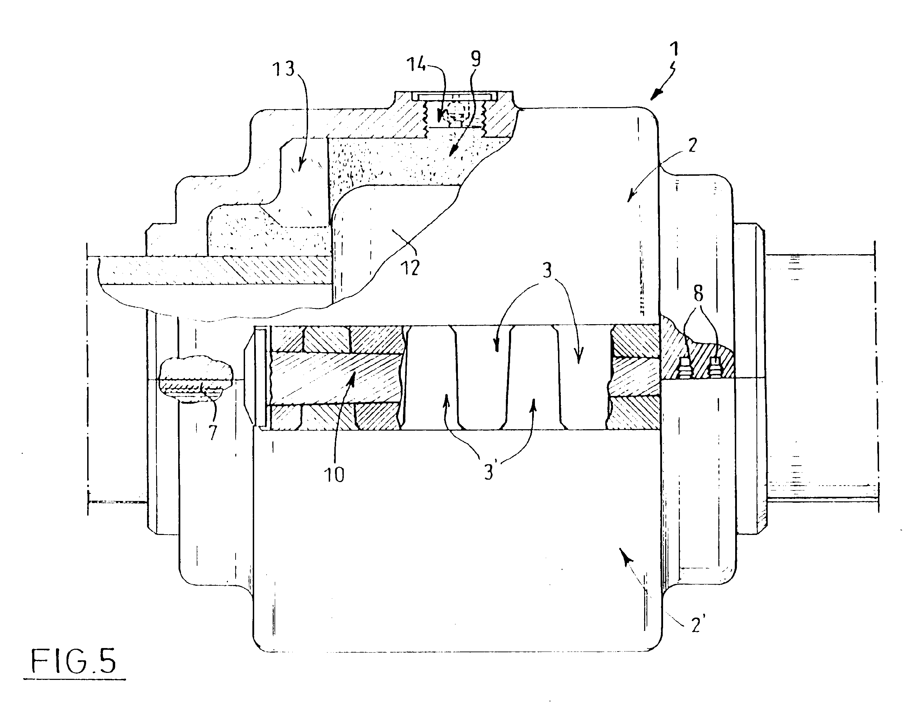

Le manchon étant particulièrement adapté pour étanchéifier les zones de fuites aux raccords des tubulures, il comporte une partie intérieure suffisante pour contenir le raccord existant (voir figures 3 et 4). Il est composé de deux demi-coquilles en matière plastique 2 et 2′ qui sont constituées de façon analogue.

La fixation des deux demi-coquilles 2 et 2′ entre elles est réalisée par les brides longitudinales qu'elles comportent l'une comme l'autre. Ces brices sont constituées avec des cannelures 3 et 3′ qui sont destinées à venir s'emboîter les unes dans les autres pour former le manchon assemblé.

Pour bloquer cet agencement de fixation, les cannelures des brides sont perforées de la façon représentée par la figure 2A par des trous ou orifices dont le diamètre varie d'une cannelure à l'autre.

Comme on peut le voir sur la figure 2A, une fois emboîtées, il reste des jeux dans les creux de cannelures et par ailleurs, les orifices ne correspondent pas les uns avec les autres de telle façon qu'une fois introduite (figure 2B) la barrette formant coin de serrage bloque les deux demi-coquilles l'une avec l'autre par effet de coin complété d'une déformation de matière.

L'étanchéité de ce manchon anti-fuite est réalisée par plusieurs moyens visibles pour la plupart sur les figures 3 et 4. Tout d'abord, au moins une des parties de chaque demi-coquille venant en contact avec les tubulures est pourvue de stries de telle façon que par simple emboîtement de la tubulure dans les demi-coquilles, on réalise une étanchéité par écrasement des stries et donc par déformation de la matière du manchon qui sera de préférence réalisé en polyéthylène.

Une autre partie de contact de chaque demi-coquille avec les tubulures est pourvue de façon connue en soi d'un fil conducteur 5, 5′ qui, mis en tension, réalisera la fusion de cette partie avec le tube en polyéthylène comme il est schématisé sur la figure 4.

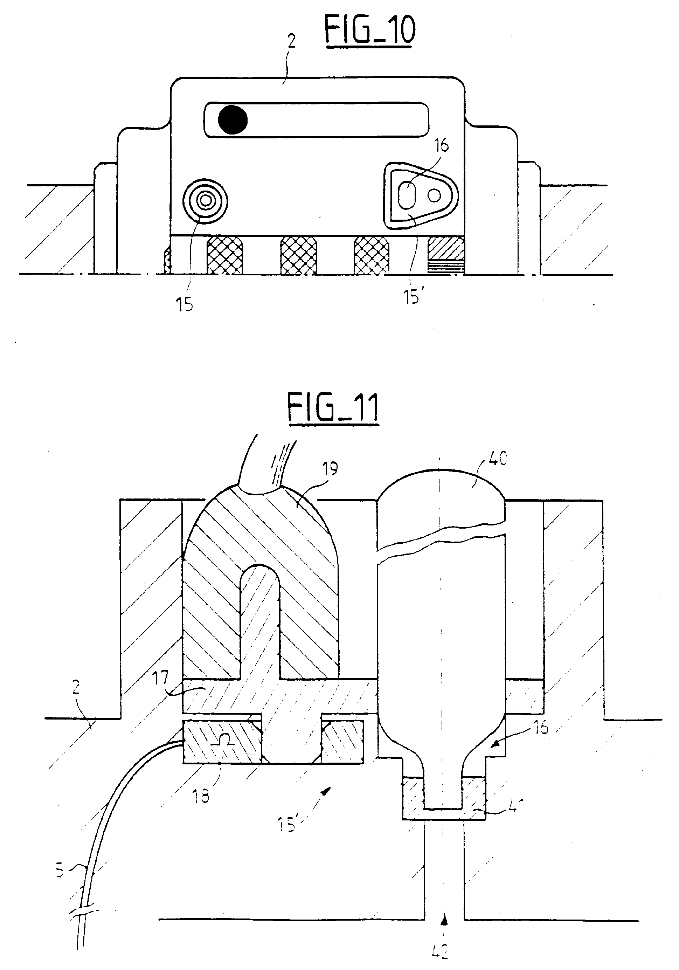

Sur la figure 10, chaque demi-coquille 2,2′ comprend deux bornes 15,15′ de raccordement aux fils conducteurs 5,5′ accessibles de l'extérieur du manchon assemblé. Ces bornes 15,15′ sont destinées à être connectées à des prises femelles d'un appareil générateur de tension. Pour éviter tout risque d'explosion dûs à des arcs électriques engendrés lors de la mise sous tension des fils conducteurs, en présence de gaz s'échappant de la tubulure à colmater, une des bornes 15′ comprend un plot 18 tel qu'une fiche femelle et un évidement 16 à proximité du plot 18, l'évidement 16 communiquant avec une gorge 42 amenagee dans la paroi interne de la demi-coquille 2 et parallèle au fil 5 sur la figure 11. Pour établir la connexion de la prise 19 avec le plot 18, l'opérateur devra obligatoirement placer une pièce 17, dite clé de sécurité, en bronze par exemple pour conduire le courant électrique. La pièce 17 comprend deux organes mâles opposés l'un à l'autre pour pénétrer respectivement le plot 18 et la prise 19 au-dessus du plot 18 afin d'établir une connexion électrique. En plus la pièce 17 porte une cartouche 40 dont une extrémité est destinée à s'introduire dans l'évidement 16 lorsqu'un organe mâle de la pièce 17 est engagé dans le plot 18. La cartouche est remplie de gaz inerte, de l'exaflorure de souffre par exemple. Lorsque la cartouche operculée s'engage dans l'évidement 16, l'opercule est poussée par une pointe 41 qui libère le gaz inerte dans la gorge 42, ce qui empêche tout risque d'explosion.

Un fil conducteur peut également être mis en place à proximité du plan de joint des deux demi-coquilles pour effectuer leur liaison par fusion de leur surface.

Par ailleurs, chaque demi-coquille est pourvue de deux joints de section importante 6, 6′, de préférence en polyuréthane et qui complète l'étanchéité du manchon.

En plus de ces différents moyens d'étanchéité, la cavité principale du manchon sera remplie d'une matière plastique, de préférence de polyuréthane, ou d'une résine par injection comme il est représenté en 9 sur la figure 4, l'orifice d'injection 11 étant alors bouche de façon connue en soi.

De préférence, l'orifice 11 est fermé par un bouchon anti-retour, à bille, à clapet ou autre. Ainsi, il suffit d'injecter la matière plastique ou la résine. Dans le cas d'une résine à bicomposant, on utilisera un mélangeur statique, réalisant le mélange des composants en même temps que son injection. En cas de mousse de matière plastique, celle-ci pourra être du polyuréthane, du silicone ou équivalents.

La figure 5 représente un manchon du type de celui conforme à l'invention mais particulièrement destiné à colmater les fuites à un raccord de canalisation destinée à transporter de l'eau et éventuellement métallique.

Ce dispositif comporte comme le précédent le même agencement de fixation et de blocage par cannelures 3, 3′ et par barrette formant coin 10.

Il est prévu, dans les zones d'extrémité du manchon, un agencement de gorges et de lèvres 7 complétant la liaison entre les deux demi-coquilles.

De plus la gorge ou la lèvre est pourvue d'un fil conducteur afin d'obtenir la fixation par électro-fusion des deux demi-coquilles.

Selon une variante, chaque demi-coquille comporte chacune une gorge venant en vis-à-vis avec l'autre et dans lesquelles est inséré un ruban contenant au moins un fil conducteur.

Par ailleurs, une des demi-coquilles peut être pourvue de plots de positionnement 8 venant s'emboîter dans des orifices correspondants des autres demi-coquilles et disposés sur les surfaces de contact autres que celles cannelées.

A l'intérieur de sa cavité 9, le manchon ainsi formé peut comporter également des ailettes de positionnement 13 destinées à centrer le raccord 12 par rapport au manchon ainsi formé.

De manière connue en soi, l'espace libre 9 est rempli de mousse de polyuréthane ou équivalent et l'orifice 11 d'injection est obturé.

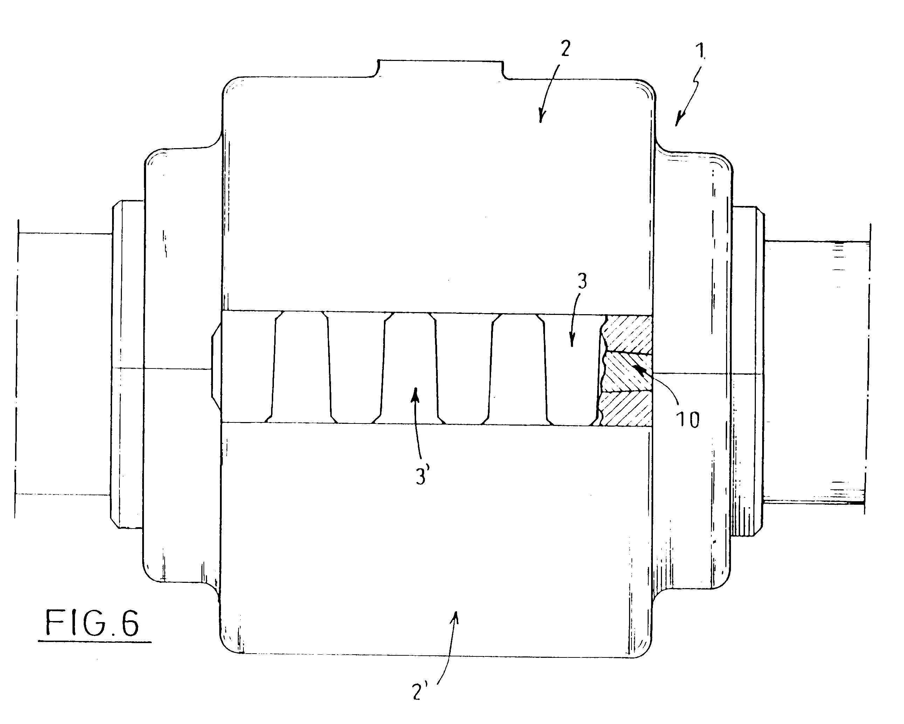

La figure 6 est une vue similaire à la figure 1 relative au manchon destiné en particulier à équiper des canalisations d'eau en polyéthylène ou en métal tel la fonte.

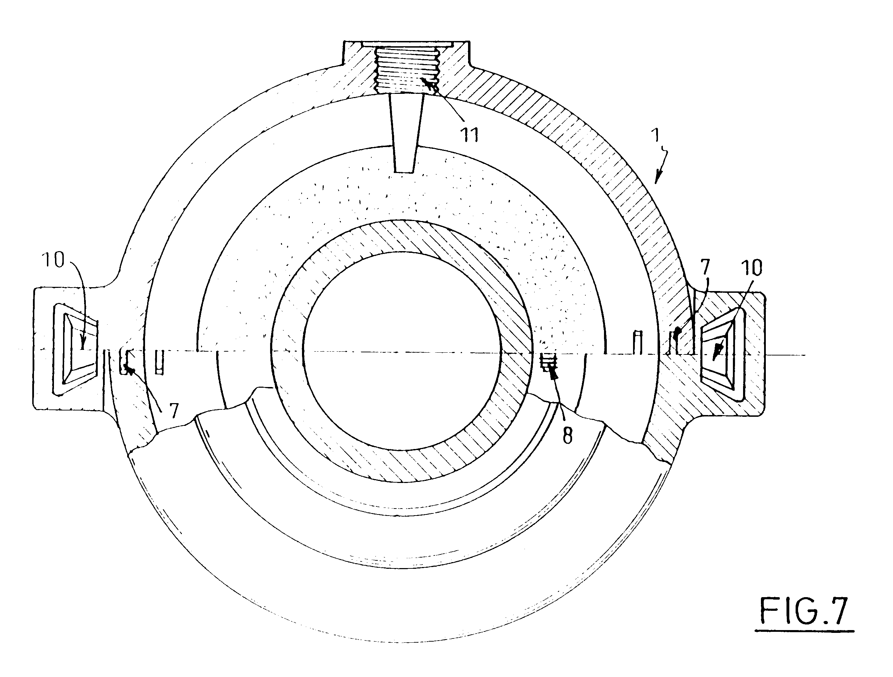

La figure 7 permet de visualiser la section de préférence trapézoïdale des barrettes de blocage. Les orifices réalisés dans les brides des demi-coquilles sont bien évidemment de forme correspondante.

On peut voir également sur cette figure, les agencements de gorges et de lèvres 7 et les plots de positionnement 8.

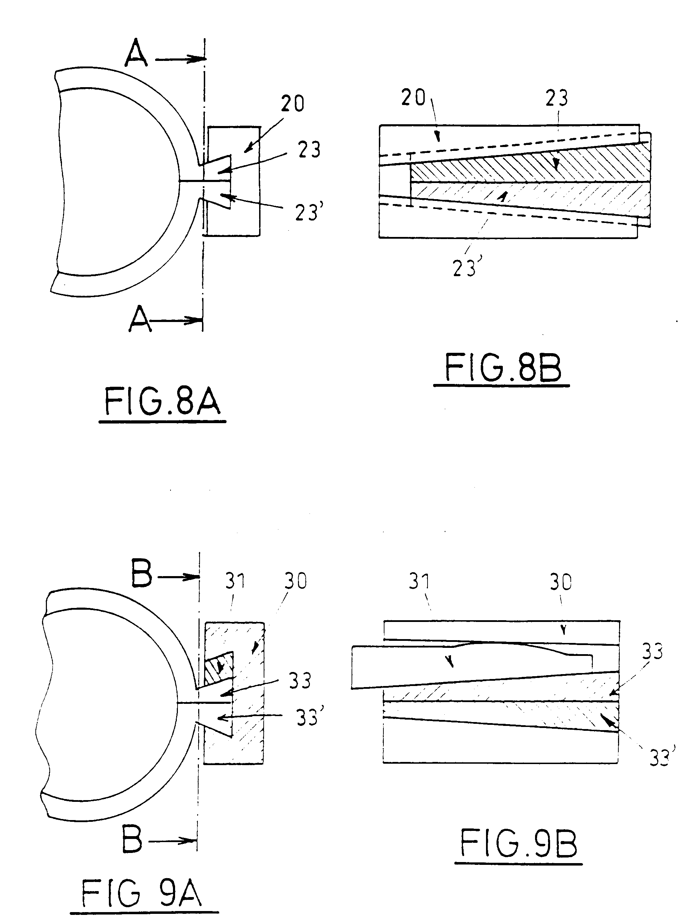

Les figures 8A à 9B présentent d'autres variantes de réalisation de la liaison des brides de fixation.

Selon les figures 8A et 8B, l'effet de coin est réalisé par la forme en coin données aux brides 23, 23′ de fixation auxquelles est associée une pièce 20 de liaison, comportant une cavité de forme complémentaire à celle de deux brides juxtaposées. Cette pièce de liaison 20 est mise en place par translation sur les brides et vient se bloquer à force lorsque les surfaces inclinées correspondantes viennent en appui. Par ailleurs, pour permettre le blocage des brides 23, 23′ et de la pièce 20 les brides 23, 23′ ont une section transversale de forme trapézoïdale, la cavité de la pièce 20 étant de forme complémentaire. Ainsi la pièce 20 est bloquée transversalement sur les brides 23, 23′.

Selon une autre variante représentée sur les figures 9A et 9B, les brides 33 et 33′ ont également une forme trapézoïdale. La pièce de liaison 30 par contre ne coopère qu'avec une seule des brides 33′ et présente par rapport à l'autre bride un jeu substantiel dans lequel vient se loger une barrette de blocage 31, le blocage se réalisant à force par effet de coin, la barrette 31 remplissant le jeu existant et venant se bloquer contre la surface d'une des brides et celle de la cavité de la pièce 30.

Par ailleurs, afin de permettre le remplissage du manchon par de la mousse de polyuréthane ou équivalent, celui-ci comporte au moins un orifice formant évent. De préférence, deux évents sont prévus de part et d'autre de l'orifice de remplissage 11.

## Revendications

1. Manchon en matière plastique de réparation de fuites dans une canalisation destinée au transport de l'eau, du gaz ou équivalent, comportant deux demi-coquilles cylindriques se raccordant l'une à l'autre le long d'un plan de joint, chacune des demi-coquilles présentant deux brides de fixation jouxtant les bords longitudinaux des demi-coquilles, les brides de fixation étant assemblées par effet de coin pour solidariser les demi-coquilles de manière à former autour de la canalisation un manchon étanche présentant une cavité intérieure, le manchon présentant un moyen d'étanchéité constitué de fils conducteurs situés à proximité du plan de joint des demi-coquilles caractérisé en ce que le manchon présente une cavité intérieure annulaire, en ce qu'une demi-coquille comporte une gorge d'étanchéité longitudinale (7) disposée à proximité desdits bords longitudinaux, en ce que l'autre demi-coquille comporte soit une gorge d'étanchéité longitudinale (7) venant en vis à vis avec l'autre gorge, soit une lèvre d'étanchéité, au moins un fil conducteur étant disposé respectivement dans un ruban placé dans une des gorges, ou dans la gorge ou la lèvre pour réaliser la fusion de la matière plastique et ainsi la liaison des deux demi-coquilles ensemble.

2. Manchon selon une des revendications 1, caractérisé en ce qu'il est constitué de polyéthylène.

3. Manchon selon la revendication 1, caractérisé par le fait que les bords en demi-cercle de chaque demi-coquille venant en contact de la tubulure, sont pourvus de stries (4, 4′) déformables formant un moyen d'étanchéité par écrasement des stries (4, 4′).

4. Manchon selon la revendication 1 à 3, caractérisé en ce qu'il comporte un autre moyen d'étanchéité consistant en au moins deux joints (6, 6′) de section importante de préférence en polyuréthane inséré en demi-cercle dans une rainure de chaque demi-coquille.

5. Manchon selon l'une quelconque des revendications précédentes et destiné aux canalisations en matière plastique notamment de transport du gaz, caractérisé en ce qu'il comporte un moyen d'étanchéité constitué de fils conducteurs (5, 5′) situés à proximité des surfaces destinées à venir en contact avec la tubulure.

6. Manchon selon l'une quelconque des revendications précédentes, caractérisé en ce qu'il comporte sur une de ses deux demi-coquilles, des plots de positionnement (8) coopérant avec des orifices correspondants sur l'autre demi-coquille.

7. Manchon selon la revendication 1, caractérisé en ce que l'effet de coin est réalisé par des cannelures (3, 3′) formées dans les brides, les cannelures de brides juxtaposées s'emboîtant les unes dans les autres et étant pourvues d'orifices de dimensions différentes et légèrement décalés les uns par rapport aux autres destinés à recevoir une barrette de blocage (10) ayant une section diminuant de sa tête vers son extrémité, réalisant un blocage supplémentaire par compression de matière.

8. Manchon selon la revendication 1, caractérisé en ce que les brides (23, 23′) ont une section transversale de forme trapézoïdale et une section longitudinale en forme de coin et qu'elles sont reliées l'une à l'autre par une pièce (20) présentant une cavité de forme complémentaire.

9. Manchon selon la revendication 1, caractérisé en ce que les brides (33, 33′) ont une section transversale de forme trapézoïdale et une section longitudinale en forme de coin et qu'elles sont reliées l'une à l'autre par une pièce (30) présentant une cavité recevant avec un jeu substantiel les brides (33, 33′), celles-ci étant bloquées par une barrette (31) de forme complémentaire au jeu existant dans la cavité de la pièce (30) et introduite dans celui-ci.

10. Manchon selon la revendication 5, caractérisé en ce que chaque demi-coquille comporte deux bornes (15, 15′) de raccordement aux fils conducteurs situés à proximité des surfaces destinées à venir en contact avec la tubulure, accessibles de l'extérieur du manchon assemblé, une des bornes (15′) ayant des moyens pour recevoir un organe de sécurité (17) se plaçant entre ladite borne et une prise (19) d'alimentation en tension, ledit organe de sécurité formant une liaison électrique entre la borne et la prise et comprenant une cartouche operculée (40) remplie de gaz inerte destinée à se vider à l'intérieur du manchon lors de la connexion de la prise à la borne.

## Patentansprüche

1. Muffe aus Plastik zum Reparieren von undichten Stellen in einer Kanalisation, die dem Transport von Wasser, Gas oder Ähnlichem dient, wobei die Muffe zwei zylindrische Halbschalen aufweist, die sich aneinander entlang einer Verbindungsebene anschließen, wobei jede der Halbschalen zwei Befestigungsflansche nächstliegend zu den Längskanten der Halbschalen aufweist, wobei die Befestigungsflansche im Verkeilungseffekt zusammengesetzt sind, um die Halbschalen derart einstückig auszubilden, daß sie um die Kanalisation herum eine dichte Muffe bilden, die eine innere Aushöhlung aufweist, wobei die Muffe eine Dichteinrichtung gebildet von in Nähe der Verbindungsebene der Halbschalen angeordneten Leitungsdrähten aufweist, dadurch gekennzeichnet, daß die Muffe eine innere ringförmige Aushöhlung aufweist, daß eine Halbschale eine längliche Dichtrille (7) aufweist, die in Nahe zu den Längskanten angeordnet ist, und daß die andere Halbschale entweder eine längliche Dichtrille (7), die der anderen Rille gegenüber liegt, oder eine Dichtlippe, und wenigstens einen Leitungsdraht aufweist, der jeweils in einem in einer der Rillen angeordneten Band oder in der Rille oder in der Lippe angeordnet ist, um das Zusammenfügen des Plastiks und somit die Verbindung der beiden Halbschalen durchzuführen.

2. Muffe gemäß Anspruch 1, dadurch gekennzeichnet, daß sie aus Polyethylen gebildet ist.

3. Muffe gemäß Anspruch 1, dadurch gekennzeichnet, daß die halbkreisförmigen Kanten jeder Halbschale, die mit dem Rohrstutzen in Kontakt kommen, mit verformbaren Riefen (4, 4′) versehen sind, die eine Dichteinrichtung durch Druckverformung der Riefen (4, 4′) bilden.

4. Muffe gemäß den Ansprüchen 1 bis 3, dadurch gekennzeichnet, daß sie eine andere Dichteinrichtung aufweist, die aus mindestens zwei Dichtungen (6, 6′) mit bedeutendem Querschnitt vorzugsweise aus Polyurethan besteht, und die im Halbkreis in eine Rille jeder Halbschale eingesetzt wird.

5. Muffe gemäß irgendeinem der vorherigen Ansprüche und für Kanalisationen aus Plastik, insbesondere zum Transport von Gas, bestimmt, dadurch gekennzeichnet, daß sie eine Dichteinrichtung aufweist, die aus Leitungsdrähten (5, 5′) gebildet ist, die in Nähe zu den Flächen angeordnet sind, die mit dem Rohrstutzen in Kontakt kommen sollen.

6. Muffe gemäß irgendeinem der vorherigen Ansprüche, dadurch gekennzeichnet, daß sie auf einer ihrer Halbschalen Positionierungsstifte (8) aufweist, die mit den entsprechenden Öffnungen auf der anderen Halbschale zusammenwirken.

7. Muffe gemäß Anspruch 1, dadurch gekennzeichnet, daß der Verkeilungseffekt durch in den Flanschen ausgebildete Riffelungen (3, 3′) hervorgerufen wird, wobei die nebeneinander liegenden Flanschriffelungen ineinander greifen und sie mit Öffnungen von verschiedenen Größen versehen sind, die leicht zueinander versetzt sind, und die dazu bestimmt sind, einen Blockierstab aufzunehmen (10), dessen Querschnitt sich vom Kopf zu seinem äußeren Ende hin verjüngt, und der eine zusätzliche Blockierung durch Materialdruck bewirkt.

8. Muffe gemäß Anspruch 1, dadurch gekennzeichnet, daß die Flansche (23, 23′) einen trapezförmigen Querschnitt und einen keilförmigen Längsschnitt haben, und daß sie miteinander durch ein Teil (20) verbunden sind, das eine Aushöhlung in ergänzender Form aufweist.

9. Muffe gemäß Anspruch 1, dadurch gekennzeichnet, daß die Flansche (33,33′) einen trapezförmigen Querschnitt und einen keilförmigen Längsschnitt haben, und daß sie miteinander durch ein Teil (30) verbunden sind, das eine Aushöhlung aufweist, die mit erheblichem Spielraum die Flansche (33, 33′) aufnimmt, welche durch einen Stab (31) blockiert werden, der eine zu dem in der Aushöhlung des Teils (30) herrschenden Spielraum ergänzende Form hat, und der in diesen eingeführt ist.

10. Muffe gemäß Anspruch 5, dadurch gekennzeichnet, daß jede Halbschale zwei in Nähe zu den Flächen, die mit dem Rohrstutzen in Kontakt kommen sollen, angeordnete Anschlußklemmen (15, 15′) an den Leitungsdrähten aufweist, die von außen der zusammengestzten Muffe zugänglich sind, wobei eine der Klemmen (15′) Einrichtungen besitzt zur Aufnahme eines Sicherungsorgans (17), das zwischen der Klemme und einer Spannungsspeisungsdose (19) angeordnet ist, wobei das Sicherungsorgan eine elektrische Verbindung zwischen der Klemme und der Dose bildet und eine Hütchenpatrone (40) gefüllt mit reaktionslosem Gas aufweist, die dazu bestimmt ist, sich im Inneren der Muffe während der Verbindung der Dose mit der Klemme zu leeren.

## Claims

1. Sleeve, formed from plastics material, for repairing leaks in a pipe-line intended for the conveyance of water, gas or the like, comprising two cylindrical half-shells which connect with each other along a jointing plane, each of the half-shells having two securing flanges lying adjacent the longitudinal edges of the half-shells, the securing flanges being assembled by means of wedging in order to join together the half-shells so as to form an impervious sleeve, having an internal cavity, around the pipe-line, the sleeve having a sealing means conprising conductor wires situated close to the jointing plane of the half-shells, characterised in that the sleeve has an internal annular cavity, in that one half-shell comprises a longitudinal sealing groove (7) disposed close to said longitudinal edges, in that the other half-shell comprises either a longitudinal sealing groove (7) facing the other groove, or a sealing lip, at least one conductor wire being disposed respectively in a band, placed in one of the grooves, or in the groove or the lip to achieve the fusion of the plastics material and, in consequence, the joining together of the two half-shells.

2. Sleeve according to claim 1, characterised in that it is formed from polyethylene.

3. Sleeve according to claim 1, characterised in that the semi-circular edges of each half-shell, which come into contact with the manifold, are provided with deformable grooves (4, 4′) which form a sealing means as a result of the grooves (4, 4′) being compressed.

4. Sleeve according to claims 1 to 3, characterised in that it comprises another sealing means, which includes at least two joints (6, 6′) having a large cross-section and preferably formed from polyurethane, said sealing means being inserted, in a semi-circle, into a groove in each half-shell.

5. Sleeve according to any of the preceding claims and intended for pipe-lines formed from plastics material, especially for the conveyance of gas, characterised in that it comprises a sealing means formed from conductor wires (5, 5′) situated close to the surfaces intended to come into contact with the manifold.

6. Sleeve according to any of the preceding claims, characterised in that it comprises, on one of its two half-shells, positioning studs (8) which co-operate with corresponding openings in the other half-shell.

7. Sleeve according to claim 1, characterised in that the wedge effect is achieved by grooves (3, 3′) formed in the flanges, the juxtaposed flange grooves fitting into one another and being provided with openings having different dimensions and being slightly offset relative to one another, such openings being intended to receive a small locking bar (10) which has a cross-section reducing from its top towards its end, thereby achieving supplementary locking by compressing the material.

8. Sleeve according to claim 1, characterised in that the flanges (23, 23′) have a cross-section of trapezoidal configuration and a longitudinal wedge-shaped section, and in that they are interconnected by a component part (20) which has a cavity of corresponding configuration.

9. Sleeve according to claim 1, characterised in that the flanges (33, 33′) have a cross-section of trapezoidal configuration and a longitudinal wedge-shaped section, and in that they are interconnected by a component part (30) which has a cavity for receiving the flanges (33, 33′) with a substantial clearance, said flanges being locked by a small bar (31), which corresponds in configuration to the clearance existing in the cavity of the component part (30) and is introduced therein.

10. Sleeve according to claim 5, characterised in that each half-shell comprises two terminals (15, 15′) for connecting to the conductor wires, which are situated close to the surfaces intended to come into contact with the manifold and are accessible from the outside of the assembled sleeve, one of the terminals (15′) having means to receive a security member (17) placed between said terminal and a voltage supply plug (19), said security member forming an electrical connection between the terminal and the plug and comprising a covered cartridge (40), which is filled with inert gas and is intended to empty itself inside the sleeve when the plug is connected to the terminal.
